# EUROPÄISCHE PATENTSCHRIFT

(11) **EP 4 058 666 B1**
(45) Veröffentlichungstag und Bekanntmachung des Hinweises auf die Patenterteilung: **17.05.2023**
(21) Anmeldenummer: 20824426.9
(22) Anmeldetag: 12.11.2020
(51) Int. Cl.: F02D 41/14, F02D 41/24, G01M 15/05

(54) **VERFAHREN UND SYSTEM ZUM KALIBRIEREN EINER STEUERUNG EINER MASCHINE**
METHOD AND SYSTEM FOR CALIBRATING A CONTROLLER OF A MACHINE
PROCÉDÉ ET SYSTÈME POUR CALIBRER LA COMMANDE D'UNE MACHINE

(30) Priorität: 12.11.2019 AT 509692019
(43) Veröffentlichungstag der Anmeldung: 21.09.2022
(73) Patentinhaber: AVL List GmbH, 8020 Graz (AT)
(72) Erfinder: GANDE, Marie-Sophie, 8101 Gratkorn (AT); SCHEIDEL, Stefan, 8020 Graz (AT); WILLIAMS, Philip, 8075 Hart bei Graz (AT); WAGNER, Andreas, 8502 Lannach (AT); SATO, Takuya, 8010 Graz (AT); COLLET, Yoann, 91440 Bures-sur-Yvette (FR); GRASSBERGER, Helmut Peter, 8010 Graz (AT); IVARSON, Mats, 8111 Gratwein-Straßengel (AT); BALACHANDRAN, Ganesh, 8010 Graz (AT); HERZER, Markus, 8010 Graz (AT)
(74) Vertreter: Hahner, Ralph
(86) Internationale Anmeldenummer: PCT/AT2020/060400
(87) Internationale Veröffentlichungsnummer: WO 2021/092640

(56) Entgegenhaltungen:
- DE-A1- 10 259 851
- DE-A1-102009 031 630
- DE-B4- 10 156 557
- US-B2- 10 360 321
- RALF ZIMMERSCHIED ET AL: "Stationäre und dynamische Motorvermessung zur uslegung von Steuerkennfeldern Eine kurze Übersicht (Static and Dynamic Measurements of Combustion Engines for Optimization of Control Mappings A Brief Survey)", AUTOMATISIERUNGSTECHNIK - AT, OLDENBOURG WISSENSCHAFTSVERLAG, MUNCHEN, DE, Bd. 53, Nr. 2, 1. Februar 2005 (2005-02-01), Seiten 87-94, XP009106152, ISSN: 0178-2312, DOI: 10.1524/AUTO.53.2.87.57312
- KUDER J ET AL: "BOSCH/AVL-IPROCEDURES FUER AVL CAMEO", MTZ - MOTORTECHNISCHE ZEITSCHRIFT, SPRINGER, Bd. 64, Nr. 12, 1. Dezember 2003 (2003-12-01), Seiten 1032-1039, XP001185159, ISSN: 0024-8525

## Beschreibung

Die Erfindung betrifft ein Verfahren zum Kalibrieren einer Steuerung einer Maschine, insbesondere einer Brennkraftmaschine, wobei Testpunkte, welche durch Werte einer Vielzahl vorbestimmter Betriebsparameter definiert und mittels eines statistischen Versuchsplans aus einem vieldimensionalen Versuchsraum ausgewählt sind, angefahren werden, wobei beim Anfahren der Testpunkte jeweils wenigstens ein Betriebsparameter in einer Vielzahl von Schritten verändert wird.

Zur Kalibrierung von Maschinen, insbesondere Antriebsmaschinen, werden im Allgemeinen Tests auf Prüfständen durchgeführt, wobei für bestimmte Betriebspunkte mit vordefinierter Drehzahl und/oder Last eine Analyse, insbesondere eine Sensitivitätsanalyse, für verschiedene Betriebsparameter durchgeführt wird. Die aus dieser Analyse gewonnenen Erkenntnisse können zum Kalibrieren der Steuerung der Brennkraftmaschine eingesetzt werden, wobei das Ziel eine optimierte Kalibrierung der Brennkraftmaschine ist.

Werden für einen Lastpunkt mehrere Betriebsparameter, beispielsweise Einspritzzeitpunkt, Zündzeitpunkt, Kraftstoffdruck, Saugrohrdruck, Abgasrückführrate etc., gleichzeitig verstellt, so ergibt sich eine äußerst große Anzahl an möglichen Parameterkombinationen, welche einzeln in Betriebsmessungen an einer zu prüfenden Maschine überprüft werden müssten. Dies würde allerdings einen erheblichen Messaufwand verursachen.

Werden pro Betriebsparameter beispielsweise auch nur zehn verschiedene Werte untersucht, müssten bei zwei Betriebsparametern 100, bei drei Betriebsparametern 1000, bei vier Betriebsparametern 10.000 und bei fünf Betriebsparametern 100.000 Testpunkte angefahren werden. Dieser Aufwand ist in der Praxis nicht durchführbar. Um den Messaufwand auf ein erträgliches Maß zu reduzieren, werden mit Hilfe der statistischen Versuchsplanung charakteristische Testpunkte aus der Gesamtmenge eines Versuchsraums ausgewählt, beispielsweise mittels eines sogenannten Center Composite Designs. Hierdurch lässt sich der Messaufwand wesentlich reduzieren, beispielsweise von einer Messung von 8.000 Testpunkten auf 50 Testpunkte.

Um den Messaufwand auf ein realistisches Maß zu beschränken, wird im Allgemeinen eine nach bestimmten Randbedingungen ausgewählte Anzahl von repräsentativen Testpunkten anhand eines mathematischen Modells ausgewählt.

Die Auswahl der Testpunkte erfolgt üblicherweise nach statistischen Methoden, wobei je nach Zielsetzung und Fragestellung der Analyse eine bestimmte Auswahlstrategie zur Anwendung kommt. Diese Vorgehensweise ist als statistische Versuchsplanung (Englisch: design of experiments) bekannt. Siehe hierzu beispielsweise: "Statistische Versuchsplanung und-auswertung", Eberhard Schäffler, Deutscher Verlag der Grundstoffindustrie, Stuttgart, 1997.

Gemäß der jeweiligen Auswahlstrategie werden Messpunkte entweder gleichmäßig in einem mehrdimensionalen Raum nach einem Modell verteilt und/oder nach bestimmten Randbedingungen gewichtet.

Kalibrierungsverfahren unter dem Einsatz von statistischer Versuchsplanung basieren im Allgemeinen auf empirischen, zeitinvarianten Modellen, die mit einem Datensatz aus stationären Messungen parametriert werden und dann optimiert und wiederum mit stationären Messungen verifiziert werden.

Die Erfassung von stationären Messungen ist jedoch relativ zeitaufwändig und daher ineffizient. Eine Analyse von Testfelddaten ergab eine Zeitdauer von durchschnittlich etwa 4 Minuten pro Testpunkt bei stationärer Messung. Diese 4 Minuten bestehen aus der Zeit, die Betriebsparameter auf einen neuen Testpunkt einzustellen, eine Veränderung der Betriebsparameter zu überprüfen, einem Betriebsgrenzen-Handling, einer Stabilisierung, einem Mittelwert und einem sogenannten Screenback zum Startpunkt - und all dies zur Messung eines einzelnen Testpunkts.

Die Auswahl der Testpunkte erfolgt bei der statistischen Versuchsplanung darüber hinaus in Unkenntnis der tatsächlichen Betriebsgrenzen nach rein statistischen Kriterien. Daher liegt, in Abhängigkeit des jeweils angewendeten statistischen Versuchsplans, ein Teil der ausgewählten Testpunkte außerhalb des Betriebsbereichs der Maschine.

Die Testpunkte außerhalb des Betriebsbereichs bzw. nicht-fahrbare Testpunkte können bei einer Analyse und zum Kalibrieren der Steuerung einer Maschine oder auch zur Modellbildung im Rahmen einer modellbasierten Kalibrierung nicht berücksichtigt werden, da keine Messungen für die Testpunkte vorliegen. Durch das Fehlen von Testpunkten bzw. Messungen an diesen Testpunkten wird die Aussagequalität der Analyse und damit die Qualität einer Kalibrierung nachteilig beeinflusst.

Ein Fehlen von Testpunkten, welche im nicht-fahrbaren Messbereich liegen, und damit eine Reduzierung der Datenbasis könnte grundsätzlich verhindert werden, indem vor der Anwendung des statistischen Versuchsplans die Betriebsgrenzen der Maschine für den jeweiligen Lastpunkt ermittelt werden würden und dann der Versuchsplan so angepasst wird, dass der gesamte fahrbare Raum ausgefüllt wird. Diese Vorgehensweise scheidet aber aufgrund des dafür nötigen hohen Messaufwands aus.

Aus dem Stand der Technik ist eine Reihe von Verfahren zur Verstellung der Betriebsparameter bekannt, um Messungen zu generieren, welche zur Kalibrierung der Steuerung einer Maschine eingesetzt werden können.

Beispielsweise beschäftigt sich das Dokument DE 101 56 557 B4 mit der Verletzung von Betriebsgrenzen. Dieses offenbart ein Verfahren zur Kalibrierung der Steuerung einer Maschine, insbesondere einer Brennkraftmaschine, wobei für zumindest einen Lastpunkt die Sensitivität verschiedener Betriebsparameter analysiert wird und unter Anwendung eines statistischen Versuchsplans für ausgewählte Messpunkte mit vorbestimmten Betriebsparametern Betriebsmessungen an der Maschine durchgeführt werden, wobei für zumindest einen nicht-fahrbaren Messpunkt Hilfsmesspunkte definiert werden, welche auf einer Verbindungslinie zwischen einem stabilen zentralen Messpunkt innerhalb der Betriebsgrenzen der Maschine und dem Messpunkt liegen, und dass der der Betriebsgrenze am nächsten liegende fahrbare Hilfsmesspunkt als Ersatzmesspunkt den weiteren Betriebsmessungen zugeführt wird. Ein weiteres Verfahren zur Kalibrierung wird in dem Dokument DE 10 2009 031630 A1 offenbart.

Es ist eine Aufgabe der Erfindung, ein Verfahren und System zur Analyse und/oder zum Kalibrieren einer Maschine bereitzustellen, welche eine verbesserte Analyse, insbesondere einen höheren Informationsgehalt, des untersuchten Betriebsraums, insbesondere im Bereich der Betriebsgrenzen, bereitstellen, ohne den zeitlichen Aufwand einer Analyse zu erhöhen.

Diese Aufgabe wird erfindungsgemäß durch ein Verfahren und System gemäß der unabhängigen Ansprüche gelöst. Vorteilhafte Ausgestaltungen werden in den Unteransprüchen beansprucht.

Ein erster Aspekt der Erfindung betrifft ein Verfahren zum Kalibrieren einer Steuerung einer Maschine nach Anspruch 1.

Ein zweiter Aspekt der Erfindung betrifft ein System zum Kalibrieren einer Steuerung einer Maschine nach Anspruch 11.

Ein Betriebsbereich im Sinne der Erfindung ist vorzugsweise ein mehrdimensionaler Raum, welcher durch die Betriebsparameter aufgespannt wird und durch vorgegebene Wertebereiche der Betriebsparameter begrenzt wird. Vorzugsweise werden die Wertebereiche durch den stabilen Betriebsbereich der Maschine vorgegeben. Weiter vorzugsweise wird die Maschine oder ein System, welches mit der Maschine im Funktionszusammenhang steht, beispielsweise eine Abgasnachbehandlungseinrichtung, außerhalb des Betriebsbereichs beschädigt.

Messdaten im Sinne der Erfindung weisen vorzugsweise Werte der in den Betriebsmessungen gemessenen bzw. beobachteten Parameter bzw. Größen und/oder der eingestellten Parameter bzw. Größen auf.

Kontinuierlich im Sinne der Erfindung bedeutet vorzugsweise fortlaufend über einen Zeitraum, insbesondere über den Zeitraum des Anfahrens von Testpunkten, insbesondere aller Testpunkte. Vorzugsweise werden alle aufgenommenen Betriebsparameter mit der gleichen Sampling-Rate gespeichert. Liegen unterschiedliche Messfrequenzen vor, so wird entweder der kleinste gemeinsame Nenner zur Speicherung genommen, oder alle Messwerte werden so verarbeitet, dass eine Speicherung mit einer festen Sampling-Rate möglich ist, beispielsweise 1 Hz; vorzugsweise werden die Signale der Betriebsparameter hierfür gefiltert, beispielsweise mittels eines laufenden Mittelwerts. Hierdurch können beispielsweise Aliasing-Effekte vermieden werden.

Ausgeben im Sinne der Erfindung bedeutet vorzugsweise Bereitstellen an einer Schnittstelle, insbesondere einer Benutzerschnittstelle oder einer Datenschnittstelle.

Die Erfindung beruht auf dem Ansatz, nicht nur an den eigentlichen, mittels des statistischen Versuchsplans ausgewählten Testpunkten Informationen über die untersuchte Maschine zu erzeugen, sondern auch jene Information, die während des Einstellens des jeweiligen Testpunkts generiert wird, aufzuzeichnen und damit für die Analyse einer Maschine und die Kalibrierung der Steuerung dieser Maschine nutzbar zu machen.

Erfindungsgemäß sind zwar, wie im Stand der Technik, die eigentlichen Testpunkte mittels statistischer Versuchsplanung berechnet bzw. ausgewählt, die Messmethodik beruht aber auf einem Screening-Verfahren, welches zwischen den einzelnen Testpunkten angewendet wird. Mithin werden die Testpunkte durch Messrampen miteinander verbunden, bei welchen die Betriebsparameter schrittweise von einem Testpunkt zum nächsten Testpunkt verändert werden und Messdaten sowohl bei jedem Schritt als auch an den Messpunkten selbst erhoben werden.

Hierbei kommt als Screening-Methode eine sogenannte Slow Dynamic Slopes-Methode zum Einsatz (im Folgenden SDS genannt). Das bedeutet, dass die Verstellung der Betriebsparameter, welche die Rampen ergibt, so langsam vorgenommen wird, dass die aufgezeichneten Messdaten als quasi-stationär gelten können. Hierfür werden vorzugsweise die Verstellzeiten zwischen einzelnen Schritten bzw. die Rampenzeiten auf Zeitkonstanten der Betriebsgrößen, insbesondere der beobachteten Ausgangsgrößen, angepasst. Es hat sich gezeigt, dass zur Vermessung eines Versuchsplans keine zusätzlichen stationären Messungen durchgeführt werden müssen.

Zur allgemeinen Funktionsweise der SDS-Methode wird auf folgende Veröffentlichungen verwiesen: "Methodology for Efficient Calibration of Model Based ECU Structures", Leithgöb, R., Bollick, M., Büchel, M., Henzinger, F., International Symposium on Development Methodology, Wiesbaden, 2005; "Methode zur schnellen Basisbedatung von Motorsteuerungen", Büchel, M., Thomas, M., International Symposium on Development Methodology, Wiesbaden, 2009.

Vergleichsversuche haben gezeigt, dass durch das erfindungsgemäße Verfahren eine wesentliche Reduzierung der Dauer zur Vermessung eine Testpunkts gegenüber einem traditionellen Messverfahren erreicht werden kann, insbesondere eine Reduzierung von bis zu ca. 2/3 der Dauer.

Des Weiteren werden durch das erfindungsgemäße Verfahren während dieser Dauer wesentlich mehr Messdaten erzeugt, so dass eine genauere Analyse eines Betriebsverhaltens der Maschine möglich ist und auch für eine Modellbildung eine bessere, weit dichtere Datenbasis vorhanden ist.

Schließlich sind die mittels der Erfindung aufgezeichneten Messdaten aufgrund der Vielzahl an Messwerten für verschiedene Kalibrieraufgaben nutzbar. Dies beruht darauf, dass auch Messpunkte zwischen den eigentlichen Testpunkten aufgenommen werden, so dass sich eine mehr oder weniger vollständige Charakterisierung des Versuchsraums ergibt. Mithin können andere Kalibrierungsaufgaben als jene, für die das Verfahren ursprünglich durchgeführt wurde, auf der Grundlage des Datensatzes durchgeführt werden, oder dieser Datensatz kann zumindest eine Messung für eine andere Kalibrieraufgabe ergänzen oder deren Grundlage bilden.

Vorzugsweise wird das erfindungsgemäße Verfahren Computer-gestützt ausgeführt. Entsprechend betreffen zwei weitere Aspekte der Erfindung ein Computerprogramm, das Anweisungen umfasst, welche, wenn sie von einem Computer ausgeführt werden, diesen dazu veranlassen, die Schritte des Verfahrens auszuführen, und ein Computer-lesbares Medium, auf dem ein solches Computerprogramm gespeichert ist.

In einer vorteilhaften Ausgestaltung des Verfahrens wird eine Veränderung des wenigstens einen Betriebsparameters so langsam durchgeführt und/oder Schrittweiten werden so klein gewählt, dass die Maschine in einem quasi-stationären Betrieb betrieben wird. Entsprechend werden in einer weiteren vorteilhaften Ausgestaltung des Verfahrens Betriebsmessungen kontinuierlich durchgeführt, wobei vorzugsweise vor einem Messabschnitt, in welchem Betriebsmessungen durchgeführt werden, kein gesonderter Stabilisierungsabschnitt vorgesehen ist, in welchem der wenigstens eine Betriebsparameter konstant gehalten wird.

Gemäß der Ausgestaltung des Verfahrens ist der zeitliche Verlauf des Veränderns von mehreren Betriebsparameters in Schritten rampenförmig, insbesondere in Bezug auf die Zeit und/oder eine zurückgelegte Strecke. Hierdurch liegen die Messpunkte vorzugsweise auf einer Linie. Hierdurch lässt sich eine besonders systematische Vermessung des Versuchsraums realisieren.

In einer weiteren vorteilhaften Ausgestaltung des Verfahrens wird bei einer Grenzwertüberschreitung einer Betriebsgrenze eines mittels der Betriebsmessung beobachteten Betriebsparameters ein Anfahren des nächsten Testpunkts abgebrochen und ein vorhergehender Testpunkt, ein vordefinierter sicherer Betriebspunkt oder ein dem Testpunkt nachfolgender Testpunkt angefahren. Durch diese Behandlung von Grenzwertüberschreitungen kann das Messverfahren ohne Unterbrechung fortgesetzt werden und weitere Messwerte in Bezug auf den zu analysierenden Versuchsraum liefern. Eine separate Methodik zur Identifizierung eines Hilfsmesspunkts an der Betriebsgrenze, wie in dem eingangs genannten Dokument DE 101 56 557 B4 beschrieben, ist nicht notwendig. Hierdurch wird Messzeit eingespart und das Messverfahren wird insgesamt vereinfacht.

Gemäß der Ausgestaltung des Verfahrens werden die Messdaten statistischen oder mathematischen Auswertungsmethoden oder Modellbildungsalgorithmen zugeführt. Beispielsweise können die Messdaten einem künstlichen neuronalen Netz, einem Random Forest-Algorithmus, einem Interpolationsverfahren, einem polynomialen Modellbildungsalgorithmus, etc. zugeführt werden. Zum einen kann hierdurch das für die Auswahl der Testpunkte verwendete Modell der statistischen Versuchsplanung kontinuierlich angepasst werden, zum anderen kann ein Modell für eine Modell-basierte Optimierung nach und nach verbessert werden.

In einer weiteren vorteilhaften Ausgestaltung des Verfahrens wird ein Modell mittels des Modellbildungsalgorithmus und/oder einem Versuchsraum, insbesondere kontinuierlich, während eines Ausführens des Verfahrens angepasst. Hierdurch können weitere Versuchspunkte iterativ und damit optimal verteilt werden.

Insbesondere können noch nicht vermessene Testpunkte mittels des, insbesondere kontinuierlich, angepassten Modells neu platziert und/oder zusätzliche Testpunkte mittels des, insbesondere kontinuierlich, angepassten Modells platziert werden. Hierbei können vorgegebene Zielkorridore in Bezug auf Ausgangsgrößen berücksichtigt werden. Wird mittels des angepassten Modells festgestellt, dass die Werte einer Ausgangsgröße diese überschreiten würden, können die Testpunkte entsprechend anders platziert werden. Insbesondere können Testpunkte dann optimal im Hinblick auf das in den Zielkorridoren widergespiegelte gewünschte Optimierungsziel platziert werden. Dadurch wird die Qualität und Effizienz des oder der Modellbildungsalgorithmen, insbesondere der kontinuierlichen Modelloptimierung, weiter verbessert. Auch hierdurch können im Rahmen einer Modell-basierten Optimierung bzw. Kalibrierung durch Projektionen mittels des Modells weitere Grenzwertüberschreitungen verhindert werden und mithin eine effizientere Versuchsdurchführung erreicht werden.

In einer weiteren vorteilhaften Ausgestaltung des Verfahrens werden Signalverläufe der Messdaten um messkanalindividuelle Verzugszeiten korrigiert. Auch hierdurch wird die Qualität und Effizienz des oder der Modellbildungsalgorithmen, insbesondere der kontinuierlichen Modelloptimierung, weiter verbessert.

In einer weiteren vorteilhaften Ausgestaltung des erfindungsgemäßen Verfahrens wird ein mittels des Modellalgorithmus gebildetes oder verändertes Modell zur Berechnung einer optimierten Kalibrierung der Steuerung herangezogen. Hierdurch kann im Rahmen einer Modell-basierten Optimierung eine iterative Optimierung der Steuerung der Maschine erreicht werden.

In einer weiteren vorteilhaften Ausgestaltung des Verfahrens wird das Modell der Maschine oder der Kalibrierung der Steuerung mit weiteren Betriebsmessungen verifiziert. Hierdurch können die mittels des Verfahrens gefundenen Werte auf ihre Richtigkeit in Bezug auf die zu untersuchende Maschine geprüft werden.

In einer weiteren vorteilhaften Ausgestaltung des Verfahrens sind die Messdaten für verschiedene Kalibrieraufgaben nutzbar, wobei aus den zur Verfügung stehenden aufgezeichneten Messdaten für jede Kalibrieraufgabe unterschiedliche Eingangs- und/oder Ausgangsgrößen ausgewählt werden können.

Durch das Auswählen der unterschiedlichen Eingangs- und/oder Ausgangsgrößen können verschiedenste Kalibrieraufgaben auf der Grundlage der aufgezeichneten Messdaten durchgeführt werden.

Die im Vorhergehenden in Bezug auf den ersten Aspekt der Erfindung erläuterten Vorteile und Merkmale gelten entsprechend auch für die übrigen Aspekte der Erfindung und umgekehrt.

Weitere Vorteile und Merkmale ergeben sich aus der nachfolgenden Beschreibung von Ausführungsbeispielen in Bezug auf die Figuren. Es zeigen wenigstens teilweise schematisch:
- **Fig. 1**: ein Blockdiagramm eines Ausführungsbeispiels eines Verfahrens zum Kalibrieren einer Steuerung einer Maschine;
- **Fig. 2**: eine Darstellung eines Ausführungsbeispiels eines Systems zum Kalibrieren einer Steuerung einer Maschine;
- **Fig. 3a und 3b**: Diagramme des Verlaufs von Eingangsparametern/Eingangsgrößen bzw. Ausgangsparametern/Ausgangsgrößen von Betriebsmessungen bei einem Verfahren zur Kalibrierung des Stands der Technik;
- **Fig. 4**: ein weiteres Diagramm von Eingangsparametern/Eingangsgrößen und Ausgangsparametern/Ausgangsgrößen von mittels des Verfahrens zum Kalibrieren einer Steuerung einer Maschine ausgeführten Betriebsmessungen;
- **Fig. 5**: verschiedene Diagramme mit Messverläufen, welche mittels des Verfahrens zum Kalibrieren einer Steuerung einer Maschine aufgezeichnet wurden; und
- **Fig. 6**: ein Diagramm nach Fig. 4, wobei verschiedene Verzögerungszeiten für eine(n) mittels eines Modells bestimmte(n) Ausgangsparameter/Ausgangsgröße und eine(n) gemessene(n) Ausgangsparameter/Ausgangsgröße gezeigt werden.
- **Fig. 7a und 7b**: Diagramme des zeitlichen Verlaufs von einem beispielhaften Eingangsparameter und den daraus resultierenden Ausgangsgrößen mit einer angenommenen Verzugszeit/Totzeit, die mittels des Verfahrens durch Verschieben der schnelleren Eingangs- und Ausgangsgrößen kompensiert wird.

Im Nachfolgenden werden die Ausführungsbeispiele in Bezug auf eine Brennkraftmaschine 1 dargestellt. Es ist für den Fachmann jedoch offensichtlich, dass die beschriebene Lehre auch auf andere Maschinen übertragbar ist, insbesondere Antriebsmaschinen, wie Elektromotoren.

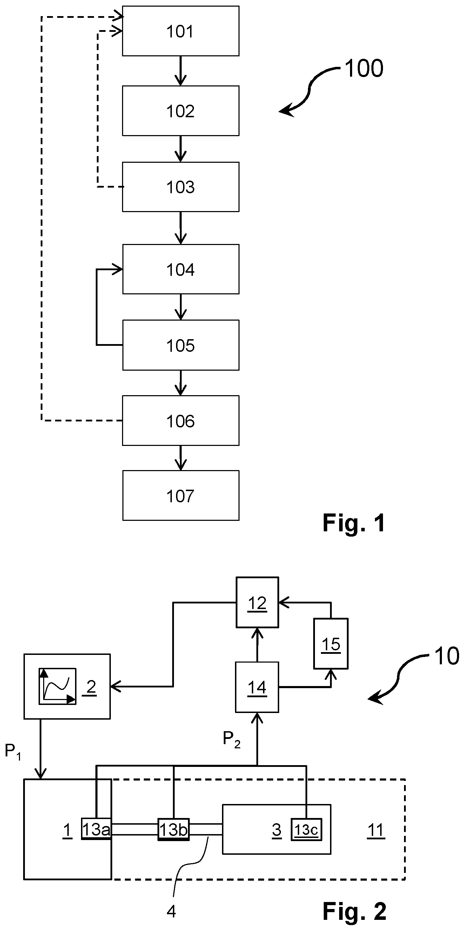

**Fig. 1** zeigt ein Ausführungsbeispiel eines Verfahrens 100 zum Kalibrieren einer Steuerung einer Maschine 1.

Der Arbeitsablauf, in welchen das Verfahren 100 zum Kalibrieren einer Steuerung eingebunden ist, ist vorzugsweise wie folgt:
Zunächst wird der durchzuführende Test bzw. Versuch, insbesondere ein Prüflauf, definiert. Es wird vorzugsweise festgelegt, was die einzustellenden bzw. die zu verändernden Eingangsparameter sind und welche Ausgangsparameter aufgezeichnet werden sollen. Es wird festgelegt, in welchen Umgebungsbedingungen der Test durchgeführt werden soll, zum Beispiel mit welcher Temperatur des Kühlmittels. Auch wird vorzugsweise festgelegt, welche Ausgangsparameter in Bezug auf Betriebsgrenzen Lim überwacht werden müssen und wo die Grenzwerte Lim liegen. Ausgehend hiervon werden Verstellbereiche für die Eingangsparameter P₁ festgelegt, und darüber hinaus wird vorzugsweise anhand dieser Eckdaten ein raumfüllendes Design (Engl: space-filling design) erzeugt.

Auf der Grundlage der Definition des Tests und des raumfüllenden Designs wird mit Hilfe eines statistischen Versuchsplans vorzugsweise ein Testplan erstellt.

Dieser Testplan weist eine Vielzahl an Testpunkten auf. Testpunkte werden hierbei durch eine Vielzahl von Betriebsparametern P bzw. deren Werte definiert, und auch bei dem Versuchsraum handelt es sich, durch die Vielzahl an Betriebsparametern, um einen vieldimensionalen Versuchsraum.

Die Testpunkte werden üblicherweise im Prüfstandsbetrieb, zum Beispiel an einem Motorenprüfstand, einem Antriebsstrangprüfstand oder einem Rollenprüfstand, vermessen. Im Allgemeinen kommen hierfür sogenannte stationäre Prüfstände zum Einsatz.

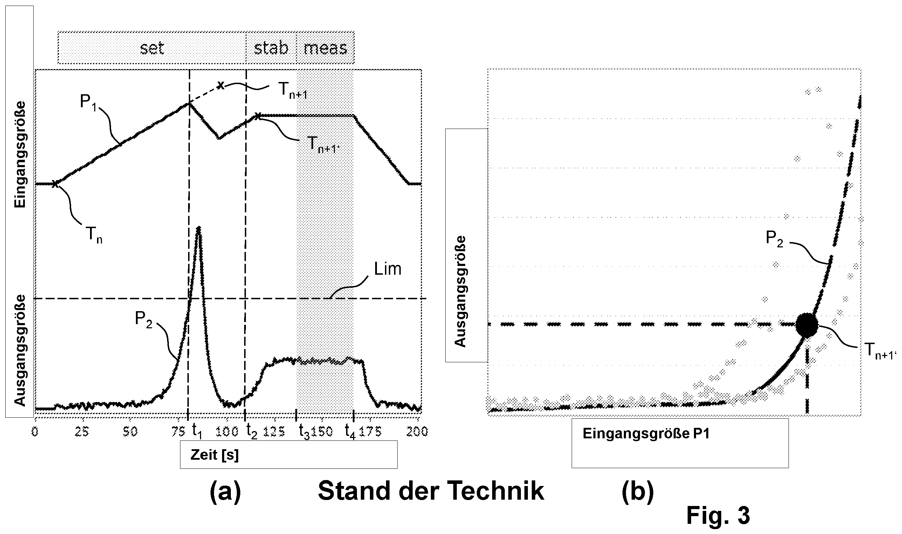

Anzufahrende Testpunkte werden eingeregelt. Ist der Testpunkt erreicht, wird gewartet, bis sich der Betrieb der Brennkraftmaschine stabilisiert und sobald während dieser Stabilisierungsphase STAB nur noch geringfügige oder keine Änderung im Betrieb der Brennkraftmaschine auftreten, wird eine Messung in der Messphase MEAS durchgeführt. Ein solcher Ablauf ist ganz allgemein in Fig. 3a dargestellt.

An dieser Stelle setzt vorzugsweise das Verfahren 100 zum Kalibrieren an.

Ähnlich wie bei Verfahren zum Kalibrieren im Stand der Technik werden in dem Verfahren 100 die Testpunkte angefahren 101. Hierbei wird wenigstens ein Betriebsparameter P₁, welcher ein Stellparameter ist, in einer Vielzahl von Schritten von einem Testpunkt Tₙ zum nächsten Testpunkt Tₙ₊₁ verändert.

In der Praxis werden hierbei üblicherweise mehrere Betriebsparameter P₁ entweder gleichzeitig oder hintereinander verstellt. Die Verstellung erfolgt hierbei vorzugsweise so langsam und/oder mit so geringen Schrittweiten, dass sich die Brennkraftmaschine 1 in einem quasi-stationären Betriebszustand befindet.

Betriebsmessungen werden dabei sowohl bei jenen Wertekonstellationen, welche sich nach jedem Schritt durch die für jeden Betriebsparameter P eingestellte Schrittweite ergeben, im Folgenden Messpunkte Mₙ genannt, als auch an den eigentlichen Testpunkten Tₙ, Tₙ₊₁, Tₙ₊₂, welche aus der Auswahl mittels der statistischen Versuchsplanung stammen, durchgeführt.

Da die Brennkraftmaschine 1 während des Verstellvorgangs der Eingangsparameter P₁ in einem quasi-stationären Betriebszustand gehalten wird, sind vorzugsweise weder vor den nach dem Vermessenen der Messpunkte Mₙ noch vor oder nach dem Vermessen der Testpunkte Tₙ, Tₙ₊₁, Tₙ₊₂ Stabilisierungszeiträume STAB vorgesehen, wie dies im Stand der Technik der Fall ist. Auch die Einstellphase SET kann mithin in die Messphase MEAS mit einbezogen werden.

Die Messphase MEAS des Verfahrens 100 kann sich somit über einen wesentlich größeren Zeitabschnitt erstrecken, als bei den klassischen Verfahren zum Kalibrieren des Stands der Technik. Vorzugsweise erstreckt sich die Messphase MEAS über die gesamte Dauer des Verfahrens 100, weiter vorzugsweise ohne Unterbrechung.

Die Messdaten aus den Betriebsmessungen, welche im Weiteren zur Analyse und Kalibrierung der Steuerung verwendet werden können, werden schließlich ausgegeben und kontinuierlich gespeichert 103.

Aufgrund der Vielzahl an Messungen bzw. der dichten Messdaten, welche mit dem Verfahren 100 erzeugt werden, können die Messdaten nicht nur für jene Kalibrieraufgabe, welche für diese erhoben wurden, genutzt werden. Vielmehr können diese auch für andere Kalibrieraufgaben verwendet werden, sofern die hierfür notwendigen Betriebsgrößen mit vermessen wurden.

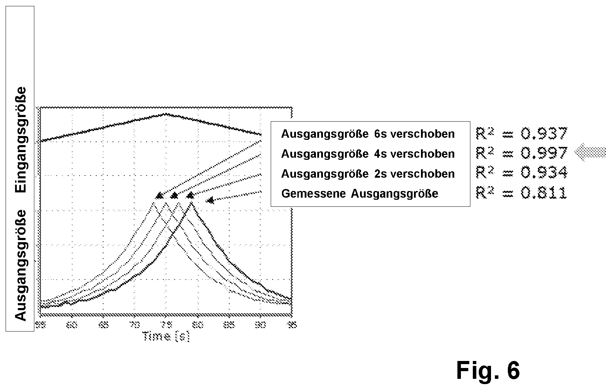

Die gespeicherten Messdaten werden statistischen und/oder mathematischen Auswertungsmethoden zugeführt 104. Insbesondere wird mit diesen Methoden eine Modellbildung vorgenommen. Vorzugsweise ist dies ein Modell der Brennkraftmaschine, des Antriebsstrangs oder des gesamten Fahrzeugs, mit welchem die jeweils modellierte Komponente simuliert werden kann. Vorzugsweise handelt es sich bei dem Modell um ein sogenanntes künstliches neuronales Netz, welches auf der Grundlage der Messdaten trainiert wird. Es können jedoch auch andere Methoden des maschinellen Lernens zum Einsatz kommen, genauso wie Polynommodelle oder Gauß-Modelle, etc. Weiter vorzugsweise wird bei der Modellbildung eine Verzögerungszeit der Signale bis zur Messung berücksichtigt. Dies wird weiter unten in Bezug auf Fig. 6 erläutert. Die Modelle können vorzugsweise oder aus einer Bibliothek von bestehenden Beispielmodellen ausgesucht werden, in welchen Zusammenhänge zwischen den Eingangsparametern P₁ und Ausgangsparametern P₂ grob angelegt sind Hierbei werden diese Modelle laufend bzw. kontinuierlich verifiziert und während des Ausführens des Verfahrens 100 angepasst 105.

Anhand dieser Modelle kann eine numerische Optimierung vorgenommen werden, um die Kalibrierung der Steuerung zu verbessern. Vorzugsweise kann eine solche optimierte Kalibrierung schon während der Ausführung des erfindungsgemäßen Verfahrens 100 rückgekoppelt werden, indem die statistische Versuchsplanung wiederholt wird bzw. indem bei der statistischen Versuchsplanung die Kenntnisse über die optimierte Kalibrierung bereits berücksichtigt werden 106.

Weiter vorzugsweise wird eine optimierte Kalibrierung schließlich mit weiteren Betriebsmessungen verifiziert 107.

**Fig. 2** zeigt ein Ausführungsbeispiel eines Systems zum Kalibrieren einer Steuerung einer Brennkraftmaschine 1.

Die Brennkraftmaschine 1 ist dabei vorzugsweise auf einem Prüfstand 11 angeordnet und weiter vorzugsweise über eine Welle 4, welche zur Brennkraftmaschine 1 oder zum Prüfstand 11 gehört, mit einem Dynamometer 3 drehfest verbunden.

Der Dynamometer 3 ist vorzugsweise eingerichtet, um eine Last auf die Brennkraftmaschine 1 aufzubringen. Des Weiteren weist der Prüfstand 11 Sensoren 13a, 13b, 13c auf, um Betriebsgrößen der Brennkraftmaschine 1 aufzunehmen. Im vorliegenden Fall könnte der Sensor 13a beispielsweise die Drosselklappenstellung aufnehmen, der Sensor 13b ein Drehmoment, welches an der Welle 4 und damit an der Brennkraftmaschine 1 anliegt, und der Sensor 13c eine Leistung, welche aufgewendet wird, um mittels des Dynamometers 3 die Welle 4 und damit die Brennkraftmaschine 1 zu bremsen.

Messwerte werden vorzugsweise über eine Datenschnittstelle 14 des Systems 10 zum Ausgeben von Messdaten aus den Betriebsmessungen an einen Datenspeicher 15 oder direkt an Mittel 12 zum Anfahren der Testpunkte Tₙ, Tₙ₊₁, Tₙ₊₂ ausgegeben.

Mittel 12 zum Anfahren der Testpunkte berechnen auf der Grundlage eines statistischen Versuchsplans und/oder der bereits generierten Messdaten die Werte der Eingangsparameter P₁ und geben diese an eine Steuerung 2 der Brennkraftmaschine 1 weiter. Die Steuerung stellt die Eingangsparameter P₁ als Sollwerte an der Brennkraftmaschine 1 ein.

**Figuren 3a und 3b** zeigen zwei Diagramme des Messverlaufs eines klassischen Verfahrens zur Kalibrierung.

Das Diagramm der Fig. 3a stellt hierbei den Verlauf des Eingangsparameters P₁ der Steuerung einer Brennkraftmaschine, d.h. der eingestellte Größe, und den dazugehörigen Verlauf des Ausgangsparameter P₂, d.h. der beobachteten Größe, in Abhängigkeit der Zeit, dar. Fig. 3b stellt nochmals ein Diagramm des Verlaufs des Ausgangsparameters P₂ in Abhängigkeit des Eingangsparameters P₁ bzw. der eingestellten Größe dar, in jenem Bereich, in dem eine Grenzwertverletzung des Ausgangsparameters P₂ auftritt.

In Fig. 3a wird, nachdem ein Testpunkt Tₙ vermessen ist, der Eingangsparameter P₁ schrittweise auf den Wert des nachfolgenden Testpunkt Tₙ₊₁ gebracht. Dieser Abschnitt des Messverfahrens ist eine Einstellphase SET, in welchem der Eingangsparameter P₁ bzw. mehrere Eingangsparameter auf den nächsten Testpunkt Tₙ₊₁ eingestellt werden, welcher mittels eines statistischen Versuchsplans ermittelt wurde.

Im dargestellten Fall tritt bei t₁ eine Grenzwertverletzung der Betriebsgrenze Lim des Ausgangsparameters P₂ auf. Infolgedessen kann der Eingangsparameter P₁ nicht auf den angesteuerten Testpunkt Tₙ₊₁ eingestellt werden.

Der Eingangsparameter P₁ wird infolgedessen zurückgestellt, bis die Grenzwertverletzung des Ausgangsparameters P₂ aufgehoben ist. Aufgrund einer Hysterese oder einer Zeitverzögerung des Ausgangsparameters dauert dies, wie aus Fig. 3a ersichtlich ist, einige Zeit, und der Eingangsparameter P₁ muss weit unter den Wert, bei welchem die Grenzwertverletzung auftrat, zurückgenommen werden.

In einem nächsten Verfahrensschritt wird der Eingangsparameter P₁ wieder in jede Richtung verstellt, in welcher die Grenzwertverletzung auftrat, allerdings mit reduzierter Schrittweite. Tritt dort keine Grenzwertverletzung auf, so schließt sich im Zeitpunkt t₂ eine Stabilisierungsphase STAB an, in welcher gewartet wird, bis sich der Motor in einem stationären Betrieb befindet und nur noch eine geringe oder sogar keine Veränderung des Ausgangsparameters P₂ mehr beobachtet werden kann. Ist dies der Fall, schließt sich vom Zeitpunkt t₃ bis zum Zeitpunkt t₄ ein Abschnitt des Messverfahrens an, in welchem eine Messung MEAS durchgeführt wird. Hierbei wird ein Hilfstestpunkt T_{n+1'} vermessen.

Wie in Fig. 3b gezeigt, wird in einem Bereich, in welchem der Ausgangsparameter P₂ eine starke Schwankung bzw. einen hohen Gradienten in Bezug auf eine Veränderung des Eingangsparameter P1 aufweist, nur eine einzige Messung eines Hilfstestpunkts T_{n+1'} vorgenommen. Gerade in einem Bereich starker Veränderungen wären jedoch eine Vielzahl an Messpunkten von Vorteil, um die Abhängigkeit des Ausgangsparameters P₂ von dem Eingangsparameter P1 genau analysieren zu können und entsprechend bei der Modellbildung berücksichtigen zu können. Dies ist auch deswegen von besonderer Bedeutung, da Optima bei der Kalibrierung von Brennkraftmaschinen oftmals in der Nähe von Betriebsgrenzen Lim angeordnet sind.

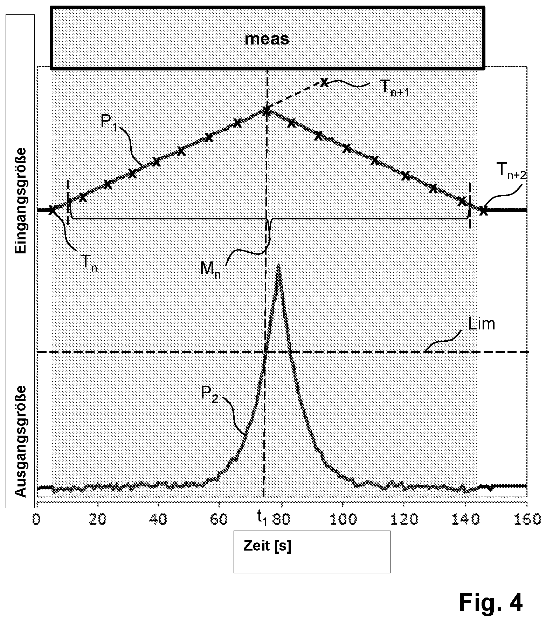

**Fig. 4** zeigt zum Vergleich ein Diagramm eines Messverlaufs des Verfahrens 100 zur Kalibrierung.

Auch hier werden nach Vermessen eines Testpunkts Tₙ, welcher mittels eines statistischen Versuchsplans ausgewählt ist, ein nachfolgender Testpunkt Tₙ₊₁ durch Verstellung des wenigstens einen Eingangsparameters P₁ angefahren. Im Gegensatz zu dem klassischen Messablauf werden bei dem Verfahren 100 jedoch kleinere Schritt ausgeführt und/oder der nachfolgende Testpunkt Tₙ₊₁ mit einer geringeren Verstellgeschwindigkeit des Eingangsparameters P₁ angefahren. Dadurch wird die Brennkraftmaschine 1 in einem quasi-stationären Betriebszustand gehalten.

Betriebsmessungen können bei dem Verfahren 100 daher nicht nur an den Testpunkten Tₙ, Tₙ₊₁ durchgeführt werden, sondern auch an Messpunkten Mₙ, welche sich durch eine Schrittweite der Verstellung des Eingangsparameters P1 ergeben.

In Fig. 4 sind diese Messpunkte Mₙ durch Kreuze auf der Linie dargestellt, welche den Testpunkt Tₙ mit dem nächsten Testpunkt Tₙ₊₁ verbindet. Vorzugsweise wird hierbei ein Messpunkt Mₙ nach jedem Verstellschritt des Eingangsparameters P₁ aufgenommen. Es ist jedoch auch möglich, Betriebsmessungen nur nach mehreren Schritten durchzuführen.

Wie auch bei dem klassischen Messverfahren nach Fig. 3a, erreicht der Ausgangsparameter P₂ am Zeitpunkt t₁ im dargestellten Fall eine Betriebsgrenze Lim. Entgegen dem klassischen Messverfahren wird bei dem Verfahren 100 aber nicht versucht, den Eingangsparameter P₁ zurückzunehmen und sich dann wieder in der ursprünglichen Verstellrichtung des Eingangsparameters P₁ der Betriebsgrenze Lim des Ausgangsparameters P₂ zu nähern. Vielmehr fährt das Verfahren 100 den nächsten Testpunkt Tₙ₊₂, welcher ebenfalls mittels des statistischen Versuchsplans ermittelt ist, an. Auch hierbei werden nach jedem Verstellschritt des Eingangsparameters P₁ oder auch nach mehreren Verstellschritten Betriebsmessungen an Messpunkten Mₙ ausgeführt. Alternativ kann nach der Grenzwertverletzung bei t₁ auch der vorherige Testpunkt Tₙ oder auch ein vordefinierter sicherer Betriebspunkt, d.h. ein Betriebspunkt, von welchem bekannt ist, dass dieser im fahrbaren Bereich des Versuchsraums liegt, angefahren werden.

Die Gesamtheit der aufgenommenen Messpunkte Mₙ in Fig. 4 ist mit einer geschweiften Klammer gekennzeichnet. Wie aus Fig. 4 ebenfalls ersichtlich ist, ist die Messdauer MEAS, welche vorzugsweise während des gesamten Messverfahrens andauert, wesentlich länger als bei dem klassischen Ansatz in Fig. 3a.

Im Wesentlichen können bei dem Verfahren 100 Messungen während des gesamten Verstellvorgangs des Eingangsparameters P₁ vorgenommen werden. Hierdurch ergibt sich eine wesentlich höhere Informationsdichte in der Messphase MEAS. Die Messphase MEAS dauert vorzugsweise vom Verlassen eines Testpunkte Tₙ bis zum Erreichen der Betriebsgrenze Lim und wiederum zum Anfahren eines nächsten Testpunkte Tₙ₊₁, Tₙ₊₂ an und ist, wie aus einem Vergleich der Diagramme gemäß Fig. 3a und Fig. 4 ersichtlich ist, dabei sogar kürzer als eine einzige Messungen des Ersatztestpunkts T_{n+1'} in Fig. 3a.

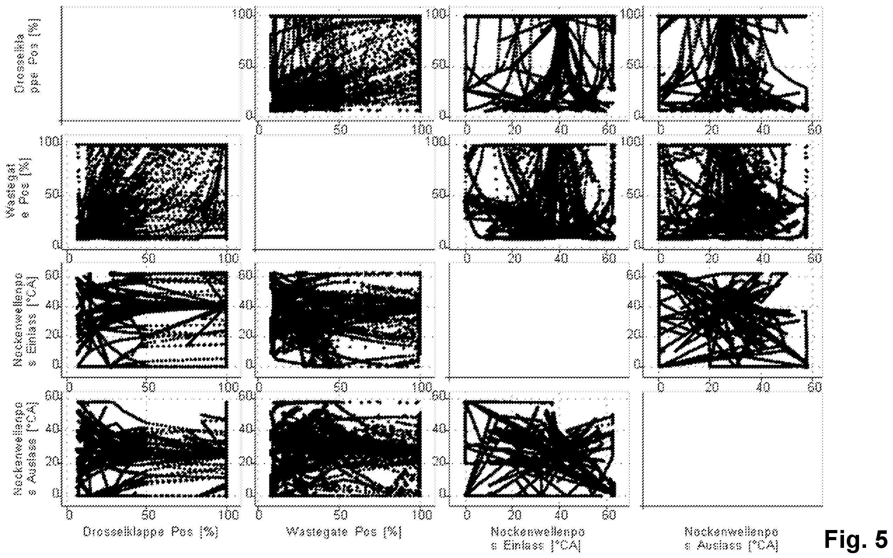

**Fig. 5** zeigt eine Reihe von Diagrammen, in welchen jeweils der zweidimensionale Versuchsraum gezeigt ist, welcher durch die jeweils an der Abszisse horizontal angegebenen Betriebsgrößen Drosselklappe, Waste Gate-Position, Nockenwellenposition-Einlass und Nockenwellenposition-Auslass als Eingangsparameter und die an der Ordinate vertikal angegeben identischen Betriebsgrößen Nockenwellenposition-Auslass, Nockenwellenposition-Einlass, Waste Gate-Position und Drosselklappe als Ausgangsparameter aufgespannt werden. Die Messungen wurden auch hier im Rahmen des Verfahrens 100 ausgeführt.

Es zeigt sich, dass die Versuchsräume durch die Messungen sehr gut abgedeckt sind. Die Messdichte ist hierbei wesentlich höher, als wenn nur die wenigen, mittels eines statistischen Versuchsplans ausgewählten Testpunkte vermessen worden wären.

Aufgrund der Dichte der Betriebsmessungen können die vermessenen Betriebsparameterpaare nicht nur für eine Kalibrieraufgabe verwendet werden, sondern die aufgezeichneten Betriebsmessungen lassen sich auch für andere Kalibrieraufgaben verwenden, bei denen die Versuchsräume vorzugsweise in etwa gleich zu den in Fig. 5 gezeigten Versuchsräumen sind.

In Bezug auf **Fig. 6** wird eine Berücksichtigung einer Verzögerungszeit der Signale bei der Modellbildung beschrieben. Hierbei geht es um den Umgang mit zeitverzögerten Signalen in dem Verfahren 100. Wie bekannt ist, haben viele reale Messsignale eine Verzögerungszeit, z.B. durch Leitungslängen bis zum Messsensor für ein Messmedium (wie bei Emissionsmessgeräten) oder durch Zeitverzögerungen (wie bei Temperaturmessstellen). Insbesondere reale Messsignale für Leistung und Emissionen werden mit einem einer gewissen Verzögerung gemessen. Wenn diese Messdaten (quasi-)stationär behandelt werden sollen, muss in Bezug auf diese Signale bei der Modellbildung die jeweilige Zeitverzögerung berücksichtigt werden.

Typische Verzögerungszeiten für z.B. Emissionsmessgeräte liegen im Bereich von wenigen Sekunden.

Im Rahmen des beschrieben Ausführungsbeispiels des Verfahrens 100, entscheidet, insbesondere im Post-Processing, vorzugsweise der Modellbildungsalgorithmus, welche Zeitverschiebung die passendste ist. Daher werden mittels eines Modellbildungsalgortihmus verschiedene Modelle für Ausgangsparameter z.B. Emissionen mit identischer Modellstruktur aber unterschiedlichen Verzögerungszeiten des Sendesignals erstellt.

Hierfür wird jeder Vektor vorzugsweise um drei verschiedene Verzögerungszeiten x, y und z Sekunden verschoben und dann mit den empirischen Modellalgorithmen getestet, welcher Zeitverzug der passendste ist und daher die beste Modellgüte R² aufweist. Dieser wird dann für die finale Datenauswertung und ggf. Optimierung herangezogen. D.h., jenes Modell, bei welchem eine simulierte Verzögerungszeit am besten mit der gemessenen Verzögerungszeit übereinstimmt, d.h. welches die beste Modellgüte R² aufweist, wird als Modell für die Optimierung ausgewählt.

In Figur 6 ist dies das Modell, bei welchem eine Verzögerungszeit von 4s für den Ausgangsparameter berücksichtigt ist.

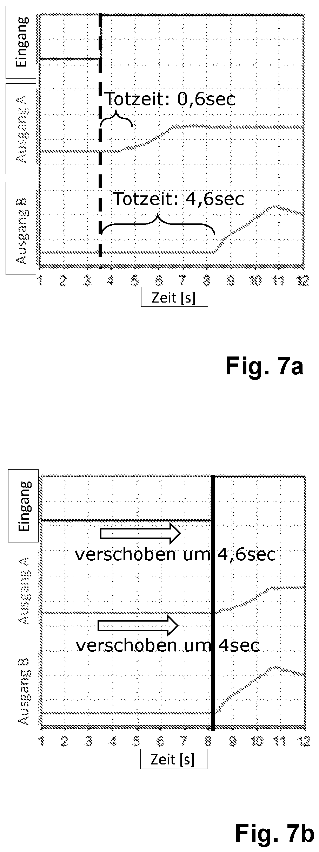

In einer weiteren vorteilhaften Ausführung des Verfahrens 100 werden Signalverläufe der Messdaten während eines Prüflaufs, während welchem das Verfahren 100 ausgeführt wird, um messkanalindividuelle Verzugszeiten korrigiert. Diese Verzugszeiten können insbesondere durch Signallaufzeiten oder Regelstrecken entstehen. Solche messkanalindividuellen Verzugszeiten in erfassten Rohdaten werden in **Fig. 7a** für einen Eingang, einen Ausgang A und einen Ausgang B dargestellt. Alle Signale werden hierbei auf das Signal mit der größten Verzugszeit synchronisiert. Eine solche Korrektur ist für den Eingang und den Ausgang A ist in **Fig. 7b** dargestellt. Im dargestellten Fall wurde der Eingang, insbesondere ein Signalverlauf einer Eingangsgröße, um 4,6 s und der Ausgang A, insbesondere ein Signalverlauf einer Ausgangsgröße A, um 4 s verschoben. Dies wird durch die Pfeile angedeutet. Hierdurch können die zeitlichen Zusammenhänge zwischen den Signalen wiederhergestellt werden. Durch eine Wertänderung des Eingangs in Form einer Theta-Funktion wird eine Signalantwort (Sprungantwort) der Ausgänge A und B hervorgerufen. Dadurch wird die Qualität und Effizienz der Modellbildungsalgorithmen, insbesondere der kontinuierlichen Modelloptimierung, weiter verbessert.

In einer weiteren vorteilhaften Ausführung des Verfahrens 100 werden die Verzugszeiten der Messkanäle individuell vor Start des Messprogramms durch Verstellen des Eingangsparameters oder der Eingangsparameter und Analyse der mit der Verzögerung behafteten Signale, insbesondere der Ausgangsparameter, bestimmt, wie beispielsweise durch die Auswertung von Sprungantworten, wie in Fig. 7a und Fig. 7b gezeigt. Dies kann entweder vorab oder im Zuge des Verfahrens 100 vorzugsweise automatisiert erfolgen. Bei den im Vorhergehenden beschriebenen Ausführungsbeispielen handelt es sich lediglich um Beispiele, die den Schutzbereich, die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen entsprechenden Merkmalskombinationen ergibt. Insbesondere können einzelne Ausführungsbeispiele miteinander kombiniert werden.

### Bezugszeichenliste

- 1: Maschine
- 2: Steuerung
- 3: Dynamometer
- 4: Welle
- 10: System
- 11: Prüfstand
- 12: Mittel zum Anfahren der Testpunkte
- 13a, 13b, 13c: Sensoren
- 14: Datenschnittstelle
- 15: Datenspeicher
- P₁: Eingangsparameter, Eingangsgröße
- P₂: Ausgangsparameter, Ausgangsgröße
- Tₙ, Tₙ₊₁, Tₙ₊₂: Testpunkt
- T_{n+1'}: Hilfstestpunkt
- t₁, t₂, t₃, t₄: Zeitpunkt
- Mₙ: Messpunkt
- Lim: Betriebsgrenze

## Patentansprüche

1. Verfahren (100) zur Betriebsanalyse einer Maschine (1) und/oder zum Kalibrieren einer Steuerung (2) der Maschine (1), insbesondere einer Brennkraftmaschine, wobei Testpunkte, welche durch Werte einer Vielzahl vorbestimmter Betriebsparameter definiert und mittels eines statistischen Versuchsplans aus einem vieldimensionalen Versuchsraum ausgesucht sind, angefahren werden (101), wobei beim Anfahren der Testpunkte jeweils mehrere Betriebsparameter (P₁) in einer Vielzahl von Schritten von einem Testpunkt (Tₙ) zum nächsten Testpunkt (Tₙ₊₁) mittels einer Slow Dynamic Slopes-Methode verändert werden, wobei Betriebsmessungen (meas) an Messpunkten (Mₙ), welche sich durch eine jeweilige Schrittweite ergeben, und an den eigentlichen Testpunkten (Tₙ, Tₙ₊₁) durchgeführt werden (102), so dass die Testpunkte durch Messrampen miteinander verbunden werden, wobei Messdaten aus den Betriebsmessungen zur Analyse und Kalibrierung der Steuerung (2) ausgegeben und kontinuierlich gespeichert werden (103), wobei die Messdaten einem Modellbildungsalgorithmus zugeführt werden (104), wobei ein Modell mittels des Modellbildungsalgorithmus während eines Ausführens des Verfahrens (100) angepasst wird (105), wobei noch nicht vermessene Testpunkte und/oder zusätzliche Testpunkte mittels des angepassten Modells platziert werden.

2. Verfahren (100) nach Anspruch 1, wobei Betriebsmessungen kontinuierlich durchgeführt werden, wobei vorzugsweise vor einem Messabschnitt (meas), in welchem Betriebsmessungen durchgeführt werden, kein gesonderter Stabilisierungsabschnitt (stab) vorgesehen ist, in welchem der wenigstens eine Betriebsparameter konstant gehalten wird.

3. Verfahren (100) nach Anspruch 1 oder 2, wobei der zeitliche Verlauf des Veränderns des wenigstens einen Betriebsparameters (P) in Schritten rampenförmig ist.

4. Verfahren (100) nach einem der vorhergehenden Ansprüche, wobei bei einer Grenzwertüberschreitung eines mittels der Betriebsmessungen beobachteten Betriebsparameters ein Anfahren des nächsten Testpunkts (Tₙ₊₁) abgebrochen wird und ein vorhergehender Testpunkt (Tₙ), ein vordefinierter sicherer Betriebspunkt oder ein dem nächsten Testpunkt (Tₙ₊₁) nachfolgender Testpunkt (Tₙ₊₂) angefahren wird.

5. Verfahren (100) nach einem der vorhergehenden Ansprüche, wobei Signalverläufe der Messdaten um messkanalindividuelle Verzugszeiten während eines Ausführens des Verfahrens (100) korrigiert werden.

6. Verfahren (100) nach einem der Ansprüche 1 bis 5, wobei ein mittels des Modellbildungsalgorithmus gebildetes oder verändertes Modell zur Berechnung einer optimierten Kalibrierung der Steuerung herangezogen wird (106).

7. Verfahren (100) nach einem der Ansprüche 1 bis 6, wobei das Modell oder die optimierte Kalibrierung der Steuerung mit weiteren Betriebsmessungen verifiziert werden (107).

8. Verfahren (100) nach einem der vorhergehenden Ansprüche, wobei die Messdaten für verschiedene Kalibrieraufgaben nutzbar sind, wobei aus den zur Verfügung stehenden aufgezeichneten Messdaten für jede Kalibrieraufgabe unterschiedliche Eingangs- und/oder Ausgangsgrößen ausgewählt werden.

9. Computerprogramm, das Anweisungen umfasst, welche, wenn sie von einem Computer ausgeführt werden, diesen dazu veranlassen, die Schritte eines Verfahrens gemäß einem der Ansprüche 1 bis 8 auszuführen.

10. Computer-lesbares Medium, auf dem ein Computerprogramm nach Anspruch 9 gespeichert ist.

11. System (10) zur Betriebsanalyse einer Maschine (1) und/oder zum Kalibrieren einer Steuerung (2) der Maschine (1), insbesondere einer Brennkraftmaschine, aufweisend:
einen Prüfstand (11) zum Anfahren von Testpunkten, welche durch Werte einer Vielzahl vorbestimmter Betriebsparameter definiert und mittels eines statistischen Versuchsplans aus einem vieldimensionalen Versuchsraum ausgesucht sind, Mittel (12) zum Anfahren der Testpunkte, eingerichtet zum Verändern jeweils mehrere Betriebsparameter (P₁) in einer Vielzahl von Schritten von einem Testpunkt (Tₙ) zum nächsten Testpunkt (Tₙ₊₁) mittels einer Slow Dynamic Slopes-Methode;
Sensoren (13) zum Durchführen von Betriebsmessungen an Messpunkten (Mₙ), welche sich durch eine jeweilige Schrittweite ergeben, und an den eigentlichen Testpunkten (Tₙ, Tₙ₊₁), so dass die Testpunkte durch Messrampen miteinander verbunden werden; und
eine Datenschnittstelle (14) zum Ausgeben von Messdaten aus den Betriebsmessungen, auf deren Grundlage die Maschine (1) analysiert und die Steuerung kalibriert wird; und
einen Datenspeicher (15), eingerichtet zum kontinuierlichen Speichern der Messdaten, wobei das System (10) eingerichtet ist, die Messdaten einer statistischen oder mathematischen Auswertungsmethode oder einem Modellbildungsalgorithmus, insbesondere einem künstlichen neuronalen Netz, zuzuführen, ein Modell mittels des Modellbildungsalgorithmus und/oder ein Versuchsraum während eines Ausführens des Verfahrens anzupassen, und noch nicht vermessene Testpunkte und/oder zusätzliche Testpunkte mittels des angepassten Modells mit definierbaren Zielkorridoren für Ausgangsgrößen, die insbesondere optimal im Hinblick auf das gewünschte Optimierungsziel definiert werden, zu platzieren.

## Claims

1. Method (100) for analyzing the operation of a machine (1) and/or for calibrating a control system (2) of the machine (1), in particular of an internal combustion engine, wherein test points which are defined by values of a plurality of predetermined operating parameters and are selected from a multi-dimensional test space by means of a statistical test plan, are approached (101), wherein, when approaching the test points, in each case a plurality of operating parameters (P₁ ) are changed in a plurality of steps from one test point (Tₙ) to the next test point (Tₙ₊₁ ) by means of a slow dynamic slopes method, wherein operating measurements (meas) are carried out (102) at measuring points (Mₙ), which are determined by a respective step size, and at the actual test points (Tₙ, Tₙ₊₁ ), so that the test points are connected to one another by measurement ramps, with measurement data from the operating measurements being output for analysis and calibration of the controller (2) and being continuously stored (103), wherein the measurement data are fed to a model building algorithm (104), wherein a model is adapted (105) by means of the model building algorithm during an execution of the method (100), wherein test points not yet measured and/or additional test points are placed by means of the adapted model.

2. The method (100) according to claim 1, wherein operational measurements are performed continuously, wherein preferably prior to a measurement section (meas) in which operational measurements are performed, no separate stabilization section (stab) is provided in which the at least one operational parameter is kept constant.

3. The method (100) according to claim 1 or 2, wherein the time course of changing the at least one operating parameter (P) in steps is ramped.

4. Method (100) according to one of the preceding claims, wherein, if a limit value of an operating parameter observed by means of the operating measurements is exceeded, an approach to the next test point (Tₙ₊₁ ) is aborted and a preceding test point (Tₙ), a predefined safe operating point or a test point (Tₙ₊₂ ) following the next test point (Tₙ₊₁ ) is approached.

5. Method (100) according to any one of the preceding claims, wherein signal characteristics of the measurement data are corrected for measurement channel-specific delay times during an execution of the method (100).

6. The method (100) of any one of claims 1 to 5, wherein a model formed or modified by means of the model building algorithm is used to calculate an optimized calibration of the controller (106).

7. The method (100) of any one of claims 1 to 6, wherein the model or optimized calibration of the controller is verified (107) with further operational measurements.

8. Method (100) according to one of the preceding claims, wherein the measurement data can be used for different calibration tasks, wherein different input and/or output variables are selected from the available recorded measurement data for each calibration task.

9. A computer program comprising instructions which, when executed by a computer, cause the computer to perform the steps of a method according to any one of claims 1 to 8.

10. A computer-readable medium on which is stored a computer program according to claim 9.

11. System (10) for analyzing the operation of a machine (1) and/or for calibrating a controller (2) of the machine (1), in particular of an internal combustion engine, comprising:
a test stand (11) for approaching test points defined by values of a plurality of predetermined operating parameters and selected from a multi-dimensional test space by means of a statistical test plan,
means (12) for approaching the test points, arranged for changing respectively a plurality of operating parameters (P₁ ) in a plurality of steps from one test point (Tₙ) to the next test point (Tₙ₊₁ ) by means of a slow dynamic slopes method;
sensors (13) for taking operational measurements at measurement points (Mₙ), which are determined by a respective step size, and at the actual test points (Tₙ, Tₙ₊₁), so that the test points are interconnected by measurement ramps; and
a data interface (14) for outputting measurement data from the operational measurements, on the basis of which the machine (1) is analyzed and the controller is calibrated; and
a data memory (15), set up for continuously storing the measurement data, the system (10) being set up to feed the measurement data to a statistical or mathematical evaluation method or to a model-building algorithm, in particular to an artificial neural network, to adapt a model by means of the model-building algorithm and/or an experimental space during execution of the method, and to place test points not yet measured and/or additional test points by means of the adapted model with definable target corridors for output variables, which are defined in particular optimally with regard to the desired optimization objective.

## Revendications

1. Procédé (100) pour analyser le fonctionnement d'une machine (1) et/ou pour calibrer une commande (2) de la machine (1), notamment d'un moteur à combustion interne, dans lequel des points d'essai, qui sont définis par des valeurs d'une pluralité de paramètres de fonctionnement prédéterminés et sont sélectionnés au moyen d'un plan d'essai statistique dans un espace d'essai multidimensionnel (101), sont atteints, dans lequel, lorsque les points d'essai sont atteints, plusieurs paramètres de fonctionnement (P₁) respectivement sont modifiés dans une pluralité d'étapes d'un point d'essai (Tₙ) au point d'essai suivant (Tₙ₊₁) au moyen d'une méthode à pentes dynamiques lentes, dans lequel des mesures de fonctionnement (meas) sont effectuées (102) sur des points de mesure (Mₙ), qui résultent d'une incrémentation respective, et sur des points d'essai (Tₙ, Tₙ₊₁) proprement dits de sorte que les points d'essai sont reliés entre eux par des rampes de mesure, dans lequel des données de mesure issues des mesures de fonctionnement sont envoyées pour l'analyse et le calibrage de la commande (2) et sont stockées en continu (103), dans lequel les données de mesure sont amenées (104) à un algorithme de modélisation, dans lequel un modèle est adapté (105) au cours d'une exécution du procédé (100) au moyen de l'algorithme de modélisation, dans lequel des points d'essai qui n'ont pas encore été mesurés et/ou des points d'essai supplémentaires sont placés au moyen du modèle adapté.

2. Procédé (100) selon la revendication 1, dans lequel des mesures de fonctionnement sont effectuées en continu, dans lequel n'est prévue, de préférence avant une section de mesure (meas), dans laquelle des mesures de fonctionnement sont effectuées, aucune section de stabilisation (stab) distincte, dans laquelle l'au moins un paramètre de fonctionnement est maintenu constant.

3. Procédé (100) selon la revendication 1 ou 2, dans lequel l'évolution dans le temps de la modification de l'au moins un paramètre de fonctionnement (P) par étapes présente un profil de rampe.

4. Procédé (100) selon l'une quelconque des revendications précédentes, dans lequel, lorsqu'un paramètre de fonctionnement observé au moyen des mesures de fonctionnement dépasse une valeur limite, une atteinte du point d'essai suivant (Tₙ₊₁) est interrompue et un point d'essai précédent (Tₙ), un point de fonctionnement sûr prédéfini ou un point d'essai suivant (Tₙ₊₁) le point d'essai suivant (Tₙ₊₂) est atteint.

5. Procédé (100) selon l'une quelconque des revendications précédentes, dans lequel des variations de signaux des données de mesure de temps de retard propres au canal de mesure sont corrigées au cours d'une exécution du procédé (100).

6. Procédé (100) selon l'une quelconque des revendications 1 à 5, dans lequel un modèle formé ou modifié au moyen de l'algorithme de modélisation est pris en compte pour calculer un calibrage optimisé de la commande (106).

7. Procédé (100) selon l'une quelconque des revendications 1 à 6, dans lequel le modèle ou le calibrage optimisé de la commande sont vérifiés (107) avec d'autres mesures de fonctionnement.

8. Procédé (100) selon l'une quelconque des revendications précédentes, dans lequel les données de mesure peuvent être utilisées pour différentes tâches de calibrage, dans lequel différentes variables d'entrée et/ou de sortie sont sélectionnées parmi les données de mesure enregistrées disponibles pour chaque tâche de calibrage.

9. Programme informatique, qui comprend des instructions qui, lorsqu'elles sont exécutées par un ordinateur, l'amènent à exécuter les étapes d'un procédé selon l'une quelconque des revendications 1 à 8.

10. Support lisible par ordinateur, sur lequel est stocké un programme informatique selon la revendication 9.

11. Système (10) pour analyser le fonctionnement d'une machine (1) et/ou pour calibrer une commande (2) de la machine (1), notamment d'un moteur à combustion interne, présentant :
un banc d'essai (11) pour atteindre des points d'essai, qui sont définis par des valeurs d'une pluralité de paramètres de fonctionnement prédéterminés et qui sont sélectionnés dans un espace d'essai multidimensionnel au moyen d'un plan d'essai statistique ;
des moyens (12) pour atteindre des points d'essai, mis au point pour modifier respectivement plusieurs paramètres de fonctionnement (P₁) dans une pluralité d'étapes d'un point d'essai (Tₙ) au point d'essai suivant (Tₙ₊₁) au moyen d'une méthode à pentes dynamiques lentes ;
des capteurs (13) pour effectuer des mesures de fonctionnement sur des points de mesure (Mₙ), qui résultent d'une incrémentation respective, et sur les points d'essai (Tₙ, Tₙ₊₁) proprement dits de sorte que les points d'essai sont reliés entre eux par des rampes de mesure ;
et une interface de données (14) pour envoyer des données de mesure issues des mesures de fonctionnement, sur la base desquelles la machine (1) est analysée et la commande est calibrée ; et
une mémoire de données (15) mise au point pour stocker en continu les données de mesure, dans lequel le système (10) est mis au point pour amener les données de mesure à une méthode d'évaluation statistique ou mathématique ou à un algorithme de modélisation, en particulier à un réseau neuronal artificiel, pour adapter un modèle au moyen de l'algorithme de modélisation et/ou un espace d'essai au cours d'une exécution du procédé, et pour placer des points d'essai qui n'ont pas encore été mesurés et/ou des points d'essai supplémentaires au moyen du modèle adapté avec des plages cibles pouvant être définies pour des variables de sortie, qui sont définies en particulier de manière optimale quant à l'objectif d'optimisation souhaité.
